# EUROPEAN PATENT APPLICATION

(11) **EP 2 034 407 A1**
(43) Date of publication of application: **11.03.2009**
(21) Application number: 07115925.5
(22) Date of filing: 07.09.2007
(51) Int. Cl.: G06F 9/54, G06F 9/44

(54) **System and method for obtaining accessible objects of a windowless control**

(71) Applicant: SIEMENS AKTIENGESELLSCHAFT, 80333 München (DE)
(72) Inventor: Diwakar, Saurabh, 122001, Gurgaon (IN); Füssler, Jens, 76297, Stutensee (DE); Grether, Thorsten, 76139, Karlsruhe (DE); Ganachuri, Mahantesh, 560040, Bangalore (IN)

(57) **Abstract**

The present invention deals with a system and method for obtaining an accessible object of a first control (20) upon generation of an accessible event by said first control (20). The proposed system (10) comprises means for notifying a set of parameters to an accessibility client (14). This set of parameters comprise the accessible event, a window handle associated with a second control (16), wherein said second control (16) is a parent of the first control (20), an identifier for the first control (20) that generated the event, and a child indicator. The child indicator is assigned a value to indicate that the event was generated by a child of the second control (16). The proposed system further includes means for routing a call to the second control (16) by the accessibility client using said handle associated with the second control (16), and retrieving, from the second control (16), an accessible object (26) of the first control (20) by the accessibility client (14), based upon the assigned value of the child indicator.

## Description

The present invention relates to accessibility tools for implementing test automation for an application program.

Operating systems, such as Microsoft Windows ^{™}, support various accessibility aids that work with applications running on these operating systems. These accessibility aids make the operating system and its applications accessible and usable, for example, during testing of an application program. Every application that supports these accessibility aids requires to implement a software interface as per its requirements, for obtaining accessible objects from a control or window.

To obtain accessible objects from a control (window), the control needs to be identified based upon a unique identifier for that control, commonly referred to as a window handle. Standard classes of accessibility aids hence require a window handle in order to provide the information on the accessible objects to the accessibility clients. In the absence of the window handle, these classes are unable to provide the required accessibility information for these controls.

In certain applications involving obtaining accessible objects from a large number of controls, the operating system might crash because of the large number of window handles that are accessed at any instant, which may be greater than a permissible value. A possible solution in such cases could be to configure some of these controls to be windowless. A windowless control is one that does not have a window handle of its own and requires a container or a parent to offer a shared window handle from which the window control gains various services such as painting, mouse message handling etc.

However, using standard accessibility classes for windowless controls would result in either a loss of accessibility information as mentioned above, or in the automatic creation of a window handle for these controls, thereby increasing the number of active window handles.

The object of the present invention is to provide an improved system and method for obtaining accessible objects from a control.

The above object is achieved by a system for obtaining an accessible object of a first control upon generation of an accessible event by said first control, said system comprising:
- means for notifying a set of parameters to an accessibility client, said set of parameters comprising said accessible event, a window handle associated with a second control, wherein said second control is a parent of said first control, an identifier for said first control that generated said event, and a child indicator, wherein said child indicator is assigned a value to indicate that said event was generated by a child of said second control, and
- means for routing a call to said second control by said accessibility client using said handle associated with the second control, and retrieving, from said second control, an accessible object of said first control by said accessibility client, based upon the assigned value of the child indicator.

The above object is achieved by a method for obtaining an accessible object of a first control upon generation of an accessible event by said first control, said method comprising:
- notifying a set of parameters to an accessibility client, said set of parameters comprising said accessible event, a window handle associated with a second control, wherein said second control is a parent of said first control, an identifier for said first control that generated said event, and a child indicator, wherein said child indicator is assigned a value to indicate that said event was generated by a child of said second control, and
- using said handle associated with the second control, routing a call to said second control by said accessibility client, whereupon, based upon the assigned value of the child indicator, the second control returns an accessible object of said first control to said accessibility client.

The underlying idea of the invention is to provide accessibility information and the notification of accessible events pertaining to the first control to an accessibility client by using a window handle of the parent control of the first control, the parent control being a windowed control.

In a preferred embodiment, the first control does not have an associated window handle. The present invention can thus be used for providing accessibility information pertaining to a windowless control to the accessibility client without creation of a window handle for the windowless control and is hence useful for obtaining accessibility information from applications having a large number of controls.

In one embodiment, said means for notifying said set of parameters includes a first application process interface adapted to transmit said set of parameters to the accessibility client using said handle of the second control. In a further embodiment, said means for routing the call to the second control comprises a second application process interface adapted to retrieve an address of the accessible interface for said first control. The first and second application process interfaces appropriately support requests for services to be made of them by the computer program in the internal code of the second control and of the accessibility client.

In a particularly preferred embodiment, said second control is adapted to determine said value of the child indicator, wherein the child indicator is assigned a value of 0 if an event is generated by said second control, and assigned a value of 1 if an event is generated by a child of said second control. This feature advantageously allows the first and second control to decide on responsibility of providing accessibility information and event notification to the accessibility client based upon the value of the child indicator.

In one embodiment, the obtained accessible object is further utilized for automated testing of an application program. The above embodiment advantageously provides automated testing of applications having a large number of controls, without the creation of window handles for all of these controls.

A further embodiment of the invention comprises deciding, upon generation of an event, whether said event has to be notified to said accessibility client directly by a control that generated the event, or the event has to be notified by a windowed parent control of said control, depending upon the whether said control is windowed control or a windowless child control of said windowed parent control. This feature advantageously allows different controls to switch responsibility of providing accessibility information and event notification between themselves at runtime.

The present invention is further described hereinafter with reference to illustrated embodiments shown in the accompanying drawings, in which:
FIG 1 is a schematic diagram illustrating a system for retrieving an accessible object of a control according to an embodiment of the present invention,
FIG 2 is a workflow diagram illustrating an exemplary method for obtaining an accessible object from a windowed child control, and
FIG 3 is a workflow diagram illustrating an exemplary method for obtaining an accessible object of a windowless child control with the help of its windowed parent control.

The embodiments described below deal with means for providing accessibility information of a windowless control and the notification of accessible events pertaining to the windowless control to an accessibility client by using a window handle of a windowed parent control of the windowless control, without creation of a window handle for the windowless control. The present invention is particularly advantageous in allowing implementation of windowless controls in .Net environment.

The term 'window handle', or simply 'handle', as used herein, refers to a unique identifier assigned to a newly created control (window). The window handle is used in application process interfaces (APIs) as the sole method of identifying the window object. That is, once the window object is created, the window handle can be used to access the services from the object it represents via the APIs. The presence of a window handle does not mean just a memory allocation for storing the identifier but it means all the resources allocated for the maintaining a window on the screen and involves tracking, routing messages to the appropriate window procedure

In the present discussion, a control having a window handle is referred to as a 'windowed control'. On the other hand, a 'windowless control' refers to a control that does not have a window handle of its own and requires a container or a parent to offer a shared window handle from which the window control gains various services such as painting, mouse message handling etc.

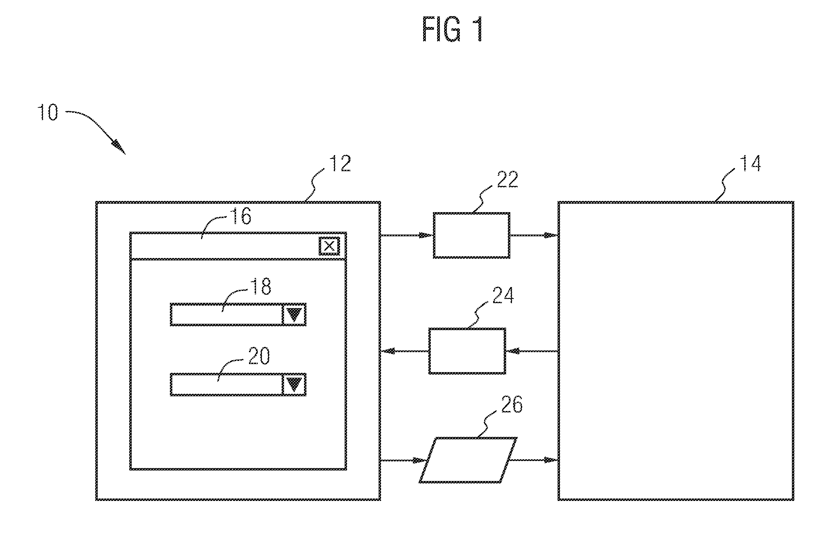

FIG 1 illustrates a system 10 for obtaining accessible objects of controls belonging to an application 12 by an accessibility client 14. As shown, the application 12 contains a control or window 16 having a plurality of child controls, represented as drop down buttons 18 and 20. In the illustrated embodiment, the drop down button 18 is a windowed control, i.e. having a window handle, whereas drop down button 20 is a windowless control. Their parent window 16 is shown to be a windowed control having an associated window handle. To retrieve an accessible object 26 from any of the controls, the accessibility client 14 communicates with the application 12 via one or more APIs 22, 24 which appropriately support requests for services to be made of them by the computer program in the internal code of the controls 16, 18, 20 and of the accessibility client 14. Advantageously, the accessible object(s) 26 retrieved by the accessibility client 14 may be effectively used to test the application 12 by automating the testing process.

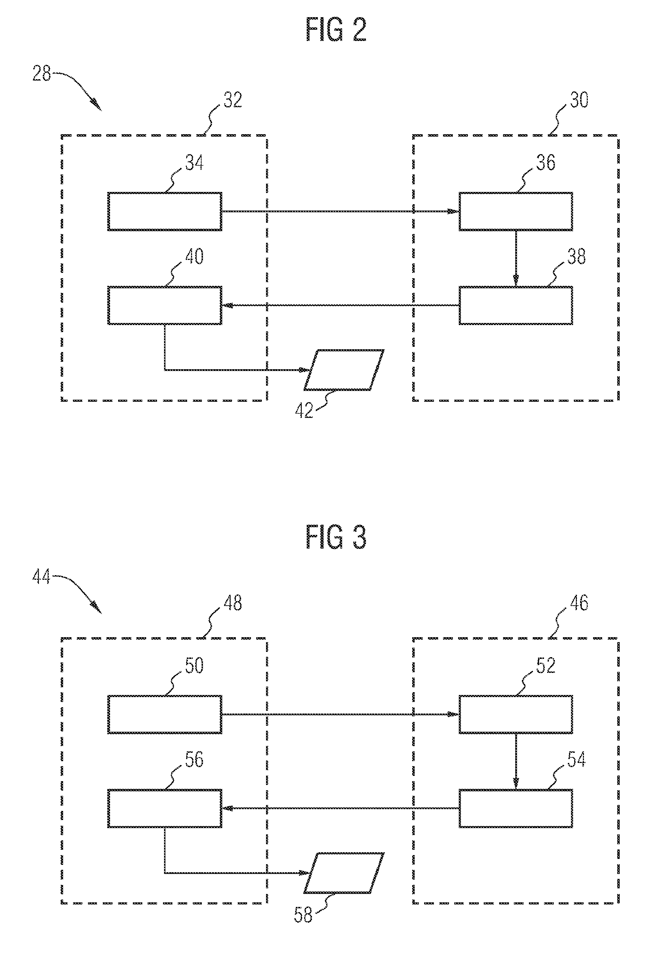

FIG 2 provides a pictorial illustration of how a windowed control, in this case, the drop down button 18 would provide its accessibility information and notify the accessibility client 14. Referring to FIG 2, a method 28 is illustrated, describing what happens when the drop down button 18 is hidden (made invisible) during runtime. The window handle of the drop down button 18 is assumed to have a value '1111'. The steps shown in FIG 2 take place upon occurrence of an accessible event, such as hiding of the drop down button 18 in this case. It should be noted that some of the steps are typically implemented in the accessibility client code (represented by dotted box 30 in FIG 2), while others are typically implemented in the internal code of the drop down button 18 (represented by dotted box 32 in FIG 2).

Referring to FIG 2, in conjunction with FIG 1, at step34, when the drop down button 18 button is made invisible, it sends a notification to the accessibility client 14. This notification is done via a first API 22. In this example, the first API 22 comprises a Windows API, NotifyWinEvent. The first API 22 receives a set of four parameters from the drop down button 18. The first of these parameters comprises the accessible event for which the accessibility client 14 is notified. In the present example, it is 'hide'. The second parameter includes the handle to the object that generated the event, i.e. the drop down button 18. In the present example, the handle that is sent to the accessibility client 14 is '1111'. The third parameter includes an identifier for the object that generated the event, i.e. of the drop down button 18. This value is one of the predefined object identifiers or a custom object identifier value. For example, this value is -4 as described in Microsoft developer network (MSDN) documentation for API. The fourth parameter includes a child indicator, referred to as child ID. The child indicator identifies whether the event was generated by an object or by a child element of the object. If this value is '0', the object itself generated the event. If not, this value is '1' indicating that a child element of the object has generated the event. As can be seen, the present example, the child indicator will have a value of '0' as the event was generated by the drop down button 18 itself, whose handle is passed to the accessibility client. Thus, in this example, the drop down button 18 sends the event to the accessibility client 14 on its own using its own handle '1111'.

At step 36, the accessibility client 14 subscribes the notification sent by the drop down button 18 by a callback function. Different clients may use different subscription techniques. The accessibility client 14 gets the event, the handle, object identifier and the child indicator at its end.

At step 38, after getting the information the handle, object identifier and the child indicator the, accessibility client 14 passes that information to a second API 24 in order to get the accessible object. In the present example, the second API 24 comprises a Windows API Accessible Object From Event.

The second API 24 retrieves the address of an accessible interface for the object (in this case, the drop down button 18) that generated the event. For example, Microsoft Active Accessibility (MSAA) clients use an accessible interface called Iaccessible for this purpose. The aforesaid event is the one that the accessibility client's event hook function is currently processing.

The second API 24 then routes the call to the control whose handle is passed to it, i.e. the drop down button 18. The second API 24 then retrieves the accessibility object present at the index passed in its parameter from the control with handle, which is also passed to it in the previous call. It should be noted that that call in step 38 is dependent upon the handle and the object identifier passed in step 34.

At step 40, the responsible control (i.e. the drop down button 18) internally calculates its accessible object 42 and returns it to the accessibility client 14.

The above discussion illustrates how the event mechanism works in case when a windowed control sends the event notification to the accessibility clients. It can be seen windowed controls, such as the drop down button 18, do not face any problem while providing the accessibility information.

It should be noted that step 34 requires a handle of the control which notifies the event. Hence a windowless control, such as drop down button 20 cannot notify the accessibility client 14, unless by otherwise creating a handle for the drop down button 20, thus resulting in the loss of the required windowless behavior. Thus for a windowless control, the rest of the steps (after step 34) are of no significance because the sending of events by an objects requires a window handle because that is the base with which the accessibility client works.

If an event has to be notified for a windowless control such as the drop down button 20, it ultimately results in the creation of the handle for the same. The moment a handle is created for the drop down button 20, the purpose of windowless ceases. The application fails all the windowless tests.

The embodiment described below addresses the challenge at of notifying the accessible events for windowless controls without creation of the handle for them.

In accordance with the present invention, the above mentioned problem is solved by delegating the responsibility of providing the accessibility information and event notification from windowless control to its windowed parent.

Herein, the windowed parent provides all the information about its windowless children and it also helps in notification of events (for windowless children) to accessibility clients. The windowed parent may not only provide the information about its immediate windowless child controls, but also for the windowless child controls in the inner hierarchies.

Referring now FIG 3, it is described how using the new strategy the windowless child manages the responsibility of sending the accessible information and notifying the accessibility client. Herein, a method 44 is illustrated, describing what happens when the drop down button 20 is hidden (made invisible) during runtime. The dropdown button 20 is operated in windowless mode so it does not have a handle. Its parent control i.e. the window 16 has a handle, which is assumed to have a value '2222'. The steps shown in FIG 3 take place upon occurrence of an accessible event, such as hiding of the drop down button 20 in this case. It should be noted that some of the steps are typically implemented in the accessibility client code (represented by dotted box 46 in FIG 3), while others are typically implemented in the internal code of the controls such drop down button 20 and its parent control 16 (represented by dotted box 48 in FIG 3).

Referring to FIG 3, in conjunction with FIG 1, at step 50, when the drop down button 20 button is made invisible, it sends a notification to the accessibility client 14. This notification is done via the first API 22. As in the earlier example, the first API 22 may comprise a Windows API, NotifyWinEvent. The first API 22 receives a set of four parameters from the drop down button 20. The first of these parameters comprises the accessible event for which the accessibility client 14 is notified. In the present example, it is 'hide'. The second parameter includes the handle to the window that contains the object that generated the event, i.e. the handle of the parent control 16 of the drop down button 20. In the present example, the handle that is sent to the accessibility client 14 is '2222'. The third parameter includes an identifier for the object that generated the event, i.e. of the drop down button 20. This value is one of the predefined object identifiers or a custom object identifier value. For example, this value is -4 as described in MSDN documentation for APIs. The fourth parameter includes the child indicator or child ID. The child indicator identifies whether the event was generated by an object or by a child element of the object. If this value is '0', the object itself generated the event. If not, this value is '1' indicating that a child element of the object has generated the event. As can be seen, the present example, the child indicator will have a value of '1' as the event was generated by a child element (drop down button 20) of the parent control 16 whose handle is passed to the accessibility client.

Thus, according to the present invention, the windowed parent of the windowless control will have the responsibility of sending some accessible events and helping the windowless controls in other events. So in the call made in step 50, the handle of the parent control 16 is sent. The parent control 16 calculates the child indicator value that is sent as the fourth parameter.
This is how button1 is able to notify the accessibility clients.

At step 52, as in the earlier example, the accessibility client 14 subscribes the notification sent by the drop down button 20 by a callback function. Different clients may use different subscription techniques. The accessibility client 14 gets the event, the handle, object identifier and the child indicator at its end.

At step 54, after getting the information the handle, object identifier and the child indicator the, accessibility client 14 passes that information to a second API 24 in order to get the accessible object. In the present example, the second API 24 comprises a Windows API Accessible Object From Event.

The second API 24 retrieves the address of an accessible interface for the object (in this case, the drop down button 20) that generated the event. For example, Microsoft Active Accessibility (MSAA) clients use an accessible interface called Iaccessible for this purpose. The aforesaid event is the one that the accessibility client's event hook function is currently processing.

The second API 24 then routes the call to the control whose handle is passed to it, i.e. the drop down button 20. The second API 24 then retrieves the accessibility object present at the index passed in its parameter from the control with handle, which is also passed to it in the previous call. It should be noted that that call in step 54 is dependent upon the handle and the object identifier passed in step 50.

In step 54, the call would usually go to the object that initiated the event but with windowless strategy this call is now routed to the windowed parent which happens to be the window 16 in this case.

At step 56, the responsible control internally calculates its accessible object 58 and returns it to the accessibility client 14. The windowed parent control 16, which had internally calculated the child ID for windowless drop down button 20 earlier, will now return the appropriate accessible object to the accessibility client 14. This is how a windowless control is able to notify the accessibility client about its 'hide' event without creation of a handle.

It should be noted that in the above example, the windowed parent control 16 had the responsibility of returning the appropriate accessible object 58. The windowless drop down button 20 used the handle of its windowed parent 16 in order to notify the accessibility clients.

Thus, the technique described above provides the advantage of getting the accessibility information of the windowless controls without creation of a handle, which otherwise would not have been possible if the standard way of getting the accessibility information was used.

It also gives an insight of how different controls can switch the responsibility of providing accessibility information and event notification, between themselves at runtime. To send an event a control decides dynamically whether it has to send it by its own or it requires the help of its windowed parent or it has to help its windowless child controls, depending upon the situation whether it is windowed control, a windowless child control or is a windowed parent for its windowless child control respectively.

With the ability to get the accessibility information from the windowless controls they can be transparently tested along with their windowed counterparts.

Summarizing, the present invention deals with a system and method for obtaining an accessible object of a first control upon generation of an accessible event by said first control. The system proposed comprises means for notifying a set of parameters to an accessibility client. This set of parameters comprise the accessible event, a window handle associated with a second control, wherein said second control is a parent of the first control, an identifier for the first control that generated the event, and a child indicator. The child indicator is assigned a value to indicate that the event was generated by a child of the second control. The proposed system further includes means for routing a call to the second control by the accessibility client using said handle associated with the second control, and retrieving, from the second control, an accessible object of the first control by the accessibility client, based upon the assigned value of the child indicator.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the spirit or scope of the present invention as defined.

## Claims

1. A system (10) for obtaining an accessible object (26) of a first control (20) upon generation of an accessible event by said first control (20), said system (10) comprising:
- means for notifying a set of parameters to an accessibility client (14)), said set of parameters comprising said accessible event, a window handle associated with a second control (16)), wherein said second control (16)) is a parent of said first control (20), an identifier for said first control (20) that generated said event, and a child indicator, wherein said child indicator is assigned a value to indicate that said event was generated by a child of said second control (16), and
- means for routing a call to said second control (16) by said accessibility client (14) using said handle associated with the second control (16), and retrieving, from said second control (16), an accessible object (26) of said first control (20) by said accessibility client (14), based upon the assigned value of the child indicator.

2. The system (10) according to claim 1, wherein said first control (20) does not have an associated window handle.

3. The system (10) according to any of the preceding claims, wherein said means for notifying said set of parameters includes a first application process interface (22) adapted to transmit said set of parameters to the accessibility client (14) using said handle of the second control (16).

4. The system (10) according to any of the preceding claims, wherein said means for routing the call to the second control (16) comprises a second application process interface (24) adapted to retrieve an address of the accessible interface for said first control (20).

5. The system (10) according to any of the preceding claims, wherein said second control (16) is adapted to determine said value of the child indicator, wherein the child indicator is assigned a value of 0 if an event is generated by said second control (16), and assigned a value of 1 if an event is generated by a child of said second control (16).

6. The system (10) according to any of the preceding claims, wherein the obtained accessible object (26) is further utilized for automated testing of an application program (12).

7. A method for obtaining an accessible object of a first control (20) upon generation of an accessible event by said first control (20), said method comprising:
- notifying a set of parameters to an accessibility client (14), said set of parameters comprising said accessible event, a window handle associated with a second control (16), wherein said second control (16) is a parent of said first control (20), an identifier for said first control (20) that generated said event, and a child indicator, wherein said child indicator is assigned a value to indicate that said event was generated by a child of said second control (16), and
- using said handle associated with the second control (16), routing a call to said second control (16) by said accessibility client (14), whereupon, based upon the assigned value of the child indicator, the second control (16) returns an accessible object (26) of said first control (20) to said accessibility client (14).

8. The method according to claim 7, wherein said first control (20) does not have an associated window handle.

9. The method according to any of claims 7 and 8, wherein notifying said set of parameters is carried out via a first application process interface (22) adapted by transmitting said set of parameters to the accessibility client (14) using said handle of the second control (16).

10. The method according to any of claims 7-9, wherein routing the call to the second control (16) is carried out via a second application process interface (24) adapted for retrieving an address of the accessible interface for said first control (20).

11. The method according to any of claims 7-10, comprising determining said value of the child indicator by the second control (16), wherein the child indicator is assigned a value of 0 if an event is generated by said second control (16), and assigned a value of 1 if an event is generated by a child of said second control (16).

12. The method according to any of claims 7-11, comprising using the obtained accessible object (26) for automated testing of an application program (12).

13. The method according to any of claims 7-12, comprising deciding, upon generation of an event, whether said event has to be notified to said accessibility client directly by a control that generated the event, or the event has to be notified by a windowed parent control of said control, depending upon the whether said control is windowed control or a windowless child control of said windowed parent control.

14. A control (16, 18, 20) configured such as to facilitate obtaining an accessible object (26) thereof by a method according to any of claims 7-13.
